# FASCICULE DE BREVET EUROPEEN

(11) **EP 0 467 724 B1**
(45) Date de publication et mention de la délivrance du brevet: **14.09.1994**
(21) Numéro de dépôt: 91401512.8
(22) Date de dépôt: 10.06.1991
(51) Int. Cl.: F16D 25/14, F16D 25/11, F15B 5/00

(54) **Distributeur d'un fluide sous pression**
Verteiler für Druckflüssigkeit
Distributor for fluid under pressure

(30) Priorité: 17.07.1990 IT 6755090
(43) Date de publication de la demande: 22.01.1992
(73) Titulaire: AlliedSignal Automotive Italia Spa, 26013 Crema (IT)
(72) Inventeur: Cadeddu, Leonardo, BENDIX EUROPE, F-93700 Drancy (FR)
(74) Mandataire: Bentz, Jean-Paul

(56) Documents cités:
- DE-A- 2 455 662
- FR-A- 2 253 646

## Description

La présente invention concerne un distributeur d'un fluide sous une pression fonction de la pression d'un fluide de commande. Un tel distributeur trouve notamment son application dans les systèmes amplifiant une commande manuelle, tel qu'un actionneur hydraulique mis, par exemple, en oeuvre pour assister la commande d'embrayage sur un véhicule automobile.

Un tel distributeur bi-fluidique est, par exemple, représenté dans EP-A 0310 733.

Ce distributeur d'un fluide, issu d'une source de fluide sous une première pression, sous une pression fonction de la pression d'un fluide de commande, comprend dans un alésage ménagé dans un corps, un moyen de valve double constitué d'une part par un premier piston dont une extrémité définit avec un premier bouchon une chambre de commande recevant le fluide de commande tandis que l'autre extrémité est percée d'un conduit relié à une source de fluide sous une deuxième pression, une chambre annulaire entourant le premier piston et étant connectée au circuit utilisateur du fluide distribué et d'autre part par un disque formant clapet et reposant grâce à un ressort de rappel, sur un siège circulaire fixe par rapport au corps, le disque étant en regard de cette autre extrémité du premier piston, cette autre extrémité étant susceptible de venir, sous l'action de la pression régnant dans la chambre de commande, en butée sur le disque pour fermer la communication entre le conduit et la chambre annulaire, puis déplacer le disque pour ouvrir une communication entre un conduit d'arrivée du fluide sous la première pression et la chambre annulaire.

Un tel distributeur, qui a été particulièrement conçu, dans le document cité, pour délivrer un gaz comprimé, présente l'inconvénient de ne délivrer ce gaz qu'à partir d'une valeur élevée de la pression du fluide dans la chambre de commande et déterminée par la pression du gaz dans la source en entrée du distributeur. Ce seuil ou saut n'est pas toujours souhaitable dans la pratique.

La présente invention a pour but d'obvier à cet inconvénient.

Selon l'invention, on atteint ce but en ajoutant à un tel distributeur un deuxième piston dont une face est solidarisée à la face du disque opposée au siège de ce dernier et dont l'autre face détermine avec un deuxième bouchon fermant l'alésage une chambre d'équilibrage communiquant en permanence avec la chambre annulaire.

De préférence, un perçage est pratiqué dans le disque et la face du deuxième piston en appui sur le disque, et la chambre annulaire est constituée par un épaulement du premier piston.

Le siège circulaire peut être alors favorablement constitué par un manchon cylindrique enfilé autour de la partie de plus petit diamètre du premier piston, et immobilisé axialement en fonctionnement normal du distributeur.

Selon un mode de réalisation, un troisième piston est disposé dans la chambre de commande de manière à déterminer deux volumes indépendants de commande pour faire fonctionner le distributeur en fonction de la plus grande des pressions des deux fluides de commande.

Dans ce cas, une électrovalve par exemple proportionnelle pourra être disposée entre la source de fluide sous pression et l'un des volumes indépendants de commande.

Selon un autre mode de réalisation, une électrovalve par exemple proportionnelle est connectée de manière à relier alternativement le conduit à une source de fluide sous pression élevée ou à une source de fluide sous basse pression.

L'invention sera mieux comprise et d'autres buts, avantages et caractéristiques de celle-ci apparaitront plus clairement à la lecture de la description qui suit de modes de réalisation donnés à titre non limitatif et à laquelle deux planches de dessins sont annexées sur lesquelles :
La Figure 1 représente schématiquement en coupe un distributeur conforme à la présente invention,
La Figure 2 représente schématiquement un perfectionnement apporté au distributeur illustré Figure 1, et,
La Figure 3 représente schématiquement le distributeur illustré Figure 1 dans une application à un actionneur d'embrayage.

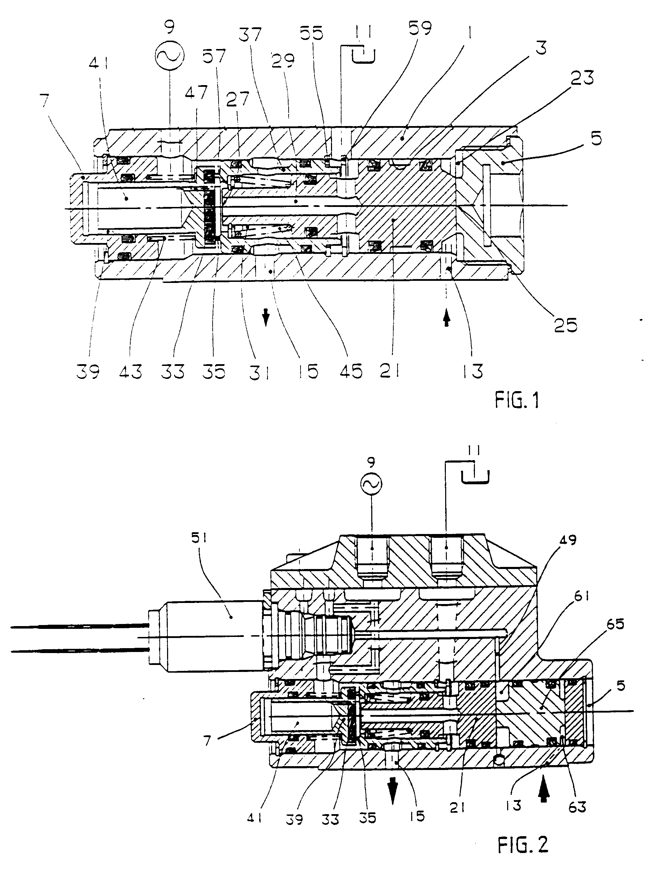

En référence maintenant aux Figures, on reconnaitra Figure 1 un distributeur réalisé dans un corps 1 dans lequel a été pratiqué un alésage 3 fermé de part et d'autre par des bouchons 5 et 7. Une source de fluide sous pression élevée 9 et un réservoir de fluide sous basse pression 11 sont reliés à l'alésage 3 par des conduits respectifs. Le distributeur comporte en outre une entrée pour le fluide de commande 13 et une sortie pour le fluide distribué 15.

Un premier piston 21 coulisse dans l'alésage 3 et une de ses extrémités 25 détermine avec le bouchon 5 une chambre de commande 23 reliée en permanence avec l'entrée 13 du fluide de commande.

L'autre extrémité 27 de ce premier piston 21 est percée d'un conduit 29 par exemple de même axe que celui de l'alésage 3. Ce conduit 29 communique avec le réservoir 11.

Une chambre annulaire 31 entourant le piston 21 communique en permanence avec la sortie 15 du fluide distribué.

Un disque de préference élastique 33 formant clapet, repose sur un siège circulaire 35 ménagé sur un manchon cylindrique 37 en appui sur une butée 55 fixe par rapport à l'alésage 3 grâce à la pression du fluide de la source 9.

Un deuxième piston 39 présente une extrémité solidaire du disque 33. Le disque 33 est par exemple encastré ou vulcanisé dans le piston 39. Ce dernier détermine, de l'autre côté, une chambre d'équilibrage 41 avec le bouchon 7. Deux ressorts de rappel, 43 et 45, ramènent l'équipage en position de repos.

Un perçage 47 est pratiqué dans le disque 33 et dans le piston 39 pour faire communiquer la chambre d'équilibrage 41 et la chambre annulaire 31 qui est donc constituée, dans l'exemple représenté, par un épaulement du piston 21.

L'ensemble est disposé pour qu'au repos, la chambre annulaire 31 communique avec le conduit 29.

Le distributeur fonctionne de la façon suivante. En partant de la position de repos représentée, on applique un fluide de commande dans la chambre 23 par l'entrée 13. Ceci a pour effet de faire coulisser le piston 21 (vers la gauche sur la Figure) à l'encontre du ressort de rappel 45 qui s'appui sur le paroi 57 du manchon 37. Du fait de la pression s'exerçant sur l'autre côté du manchon 37, ce dernier reste immobile, et l'extrémité 27 du piston 21 vient en butée sur le disque 33, interrompant ainsi la communication entre le réservoir 11 et le circuit utilisateur en bouchant le conduit 29. La pression dans la chambre 41 est toujours égale à celle régnant dans le circuit utilisateur.

Lorsque la pression régnant dans la chambre de commande 23 augmente, le disque 33 décolle de son siège 35, ouvrant ainsi une communication entre la source de fluide sous pression élevée 9 et la chambre annulaire 31 et par suite le circuit utilisateur connecté à la sortie 15.

Simultanément, la pression régnant dans la chambre annuaire 31 augmente et pour une pression déterminée, le piston 21 se déplace vers la droite sur la Figure jusqu'à ce qu'il y ait équilibre des pressions et permet ainsi au disque 33 de venir se réappuyer sur son siège 35. Cette pression est déterminée par les rapports des surfaces actives, comme il est bien connu de l'homme du métier.

Si la pression dans la chambre 23 augmente, le disque 33 s'écarte de son siège 35 à nouveau, et le cycle recommence.

Si la pression dans la chambre 23 diminue, le piston 21 revient vers sa position de repos, débouchant ainsi le conduit 29. La pression diminue alors immédiatement dans le circuit utilisateur et dans la chambre d'équilibrage 41 du fait du retour du fluide utilisé vers le réservoir 11.

On obtient bien ainsi un distributeur de fluide sous une pression fonction de la pression du fluide de commande, sans seuil ou saut initial notable.

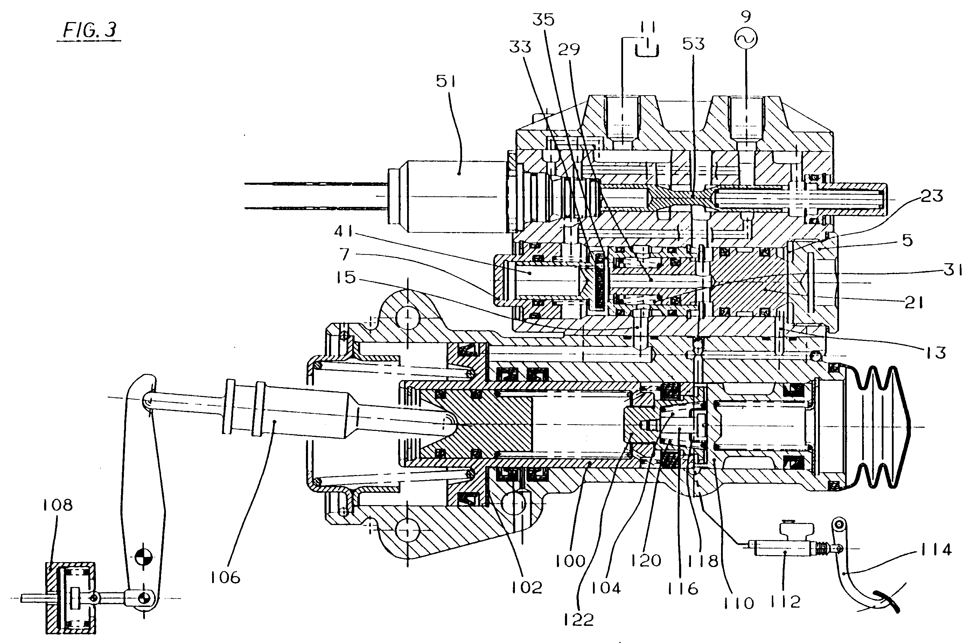

En cas de défaillance de la source 9, le fluide de commande dans la chambre 23 déplace le piston 21 comme précédemment indiqué. Toutefois, comme il n'y a plus de pression exercée sur le manchon 37 par la source 9, le déplacement du piston 21 entraine par l'intermédiaire du ressort 45, le déplacement de l'ensemble constitué par le manchon 37, le disque 33 et le piston 39. Un passage est alors ménagé pour le fluide entre le réservoir 11 et la sortie 15 pour éviter toute dépression dans le circuit utilisateur (chambre 102 de la Figure 3). Le déplacement du piston 21 est alors limité par une butée 59 solidaire de l'alésage 3.

Figure 2, le distributeur comporte en plus un troisième piston 65 disposé entre le premier piston 21 et le bouchon 5, de manière à diviser la chambre de commande en deux volumes indépendants 61 et 63. Le volume 63 est connecté comme précédemment à l'entrée 13 du fluide de commande, et le volume 61 est connecté à une entrée 49 d'un deuxième fluide de commande.

De ce fait, le distributeur délivre un fluide sous une pression fonction de la plus grande des pressions des deux fluides de commande.

Dans le mode de réalisation représenté sur cette Figure 2, le deuxième fluide de commande est délivré par la source 9 et sa pression est modulée par une électrovalve, par exemple proportionnelle 51. Par ce moyen, on peut réaliser un système pouvant être actionné manuellement et/ou électriquement.

Figure 3, on retrouve le distributeur de la Figure 1. Il est également associé à une électrovalve proportionnelle. Toutefois, l'électrovalve 51 est disposée de manière à relier alternativement le conduit 29 du distributeur à la source de fluide sous pression élevée 9 ou au réservoir 11, la source 9 restant connectée comme précédemment en amont du disque 33 du distributeur.

L'électrovalve 51, commande la position d'un tiroir 53 assurant la liaison alternative précitée.

Ainsi, lorsque le réservoir 11 est relié au conduit 29, le distributeur fonctionne de la façon indiquée précédemment.

Lorsque la source 9 est reliée au conduit 29, le fluide circule librement de la source à la chambre annulaire 31 et à la sortie 15, la pression de fluide étant alors modulée par l'électrovalve 51. Le distributeur fonctionne alors indépendamment de la pression régnant dans la chambre de commande 23.

Figure 3, on a également représenté schématiquement le distributeur dans une application à la commande d'un actionneur d'embrayage. Cette application est commune à tous les modes décrits ci-avant de distributeur selon l'invention.

L'actionneur est, dans l'exemple représenté du type à rattrapage d'usure, mais cela n'est pas nécessaire. Il comporte essentiellement un piston étagé 100 définissant, avec un alésage correspondant deux chambres de travail 102 et 104. Ce piston 100 assure le déplacement d'une tige 106 commandant un mécanisme d'embrayage 108. Une pédale 114 permet d'actionner un émetteur 112 relié à la chambre de travail 104 et à l'entrée 13 de la chambre de commande 23 du distributeur. La sortie 15 du distributeur est reliée à l'autre chambre de travail 102 de l'actionneur.

Le dispositif fonctionne ainsi en mode manuel. Lorsque le conducteur appuie sur la pédale 114, il génère une pression qui fait coulisser le piston 100 et le piston 21. Ce dernier bouche alors le conduit 29 et décolle le disque rigide 33 de son siège 35. Un fluide sous pression est alors amené via le conduit 15 à la chambre de travail 102, ce qui détermine une assistance au débrayage. A noter que grâce au distributeur équilibré selon l'invention, la pression d'assistance, c'est à dire la pression du fluide dans la chambre de travail 102 est proportionnelle à celle régnant dans la chambre de travail 104, et le conducteur peut ainsi totalement contrôler l'action.

Le dispositif peut également être commandé électriquement en excitant l'électrovalve 51 avec un courant dont l'intensité est proportionnelle à la pression du fluide distribué par la sortie 15 à la chambre de travail 102.

On notera qu'un piston mobile 110 de type connu en soi, se déplacera en même temps que le piston 100 de l'actionneur pour éviter que la chambre de travail 104 augmente sensiblement de volume, c'est à dire pour éviter une circulation de fluide entre l'émetteur 112 et la chambre 104.

En effet, le fluide sous pression dans la chambre de travail 102 déplace le piston 100 (vers la gauche sur la Figure 3) entrainant le piston 122 qui lui est solidaire. Un ressort conique 120, qui a une charge supérieure à celle du ressort situé dans la chambre interne du piston 110, maintient celui-ci en position de repos. Quand le piston 122 vient en contact avec le joint annulaire formant clapet, et ferme ainsi le passage du fluide entre la chambre 104 et la chambre interne du piston 100, cette dernière est isolée et forme un mur hydraulique. Une vis 116 qui est solidaire des pistons 100 et 122 vient alors en contact d'une butée 118 du ressort 120. En continuant à se déplacer, les pistons 100, 122 et le vis 116 entrainent le déplacement de la butée 118, ce qui a pour conséquence d'annuler l'effet du ressort 120 sur le piston 110. Ce dernier va alors se déplacer avec l'ensemble grâce à un ressort judicieusement disposé par rapport à ce piston 110.

Il faut également noter que pendant que l'actionneur représenté fonctionne selon un mode, l'autre mode peut être choisi par le conducteur sans effet négatif.

Enfin, du fait de la séparation des deux circuits fluidiques, une défaillance de l'un deux n'empêche pas le fonctionnement de l'autre circuit.

L'Homme de l'Art aura compris que de nombreuses modifications pourront être apportées à la présente invention sans sortir du cadre de l'invention tel que défini par les revendications jointes.

Par exemple, l'électrovalve préférée 51 est du type proportionnel. Toutefois, on pourrait également utiliser une électrovalve classique fonctionnant en tout-ou-rien en contrôlant sa fréquence de battement.

## Revendications

1. Distributeur d'un fluide issu d'une source de fluide sous pression, sous une pression fonction de la pression d'un fluide de commande, le dit distributeur comprenant, dans un alésage (3) ménagé dans un corps (1) un moyen de valve double constitué, d'une part, par un premier piston (21) dont une extrémité (25) définit avec un premier bouchon (5), une chambre de commande (23) recevant le fluide de commande tandis que l'autre extrémité (27) est percée d'un conduit (29) relié à un réservoir de fluide sous basse pression (11), une chambre annulaire (31) entourant le dit premier piston (21) et étant connectée au circuit utilisateur du fluide distribué et, d'autre part, par un disque (33) formant clapet et reposant sur un siège circulaire (35) grâce à un ressort de rappel (43) , le dit disque (33) étant en regard de la dite autre extrémité (27) du premier piston, la dite autre extrémité étant susceptible de venir, sous l'action de la pression régnant dans la chambre de commande (23), en butée sur le dit disque (33) pour fermer la communication entre le dit conduit (29) et la dite chambre annulaire (31) puis déplacer le dit disque (33) pour ouvrir une communication entre un conduit d'arrivée du dit fluide sous pression et la dite chambre annulaire (31), caractérisé en ce qu'il comprend en outre un deuxième piston (39) dont une face est solidarisée à la face du disque (33) opposée au siège (35) de ce dernier et dont l'autre face détermine avec un deuxième bouchon (7) fermant le dit alésage (3) une chambre d'équilibrage (41) communiquant en permanence avec la dite chambre annulaire (31).

2. Distributeur selon la revendication 1 caractérisé en qu'un perçage est pratiqué dans le disque et la face du deuxième piston (39) en appui sur le disque (33) pour faire communiquer la dite chambre annulaire (31) et la dite chambre d'équilibrage (41).

3. Distributeur selon la revendication 1 ou 2 caractérisé en ce que la dite chambre annulaire est constituée par un épaulement du dit premier piston (21).

4. Distributeur selon la revendication 3 caractérisé en ce que le dit siège circulaire (35) est constitué par un manchon cylindrique (37) enfilé autour de la partie de plus petit diamètre du dit premier piston (21) et immobilisé axialement en fonctionnement normal.

5. Distributeur selon l'une quelconque des revendications précédentes, caractérisé en ce qu'un troisième piston (65) est disposé dans la chambre de commande (23) de manière à déterminer deux volumes (61, 63) indépendants de commande pour faire fonctionner le dit distributeur en fonction de la plus grande des pressions des deux fluides de commande.

6. Distributeur selon la revendication 5 caractérisé en ce qu'une électrovalve (51) est disposée entre la source de fluide sous pression (9) et l'un des dits volumes indépendants de commande (61)

7. Distributeur selon les revendications 1 à 5 caractérisé en ce qu'une électrovalve (51) est connectée de manière à relier alternativement le dit conduit (29) à une source de fluide sous pression élevée (9) ou à un réservoir de fluide sous basse pression (11).

8. Distributeur selon la revendication 6 ou 7 caractérisé en que la dite électrovalve (51) est une électrovalve proportionnelle.

9. Actionneur hydraulique comprenant au moins un piston (100) et deux chambres de travail (102, 104) isolées l'une de l'autre caractérisé en ce qu'il comprend en outre un distributeur selon l'une quelconque des revendications précédentes, dont la chambre de commande (23) est reliée à l'une des dites chambres de travail (104) tandis que la dite chambre annulaire (31) est reliée à l'autre (102) des dites chambres de travail.

## Claims

1. Distributor of a fluid coming from a source of fluid under pressure and under a pressure which is a function of the pressure of a control fluid, said distributor comprising, in a bore (3) made in a body (1), a double valve means consisting, on the one hand, of a first piston (21), one end (25) of which defines with a first plug (5) a control chamber (23) receiving the control fluid, while the other end (27) is pierced with a conduit (29) connected to a reservoir of fluid under low pressure (11), an annular chamber (31) surrounding said first piston (21) and being connected to the consumer circuit of the distributed fluid, and, on the other hand, of a disk (33) forming a shutter and resting on a circular seat (35) by means of a return spring (43), said disk (33) being opposite said other end (27) of the first piston, said other end being capable, under the action of the pressure prevailing in the control chamber (23), of coming up against said disk (33), so as to close communication between said conduit (29) and said annular chamber (31), and then of displacing said disk (33) so as to open communication between a conduit for the inlet of said fluid under pressure and said annular chamber (31), characterized in that it comprises, furthermore, a second piston (39), one face of which is fixed to the face of the disk (33) opposite the seat (35) of the latter and the other face of which defines with a second plug (7) closing said bore (3) a balancing chamber (41) communicating permanently with said annular chamber (31).

2. Distributor according to Claim 1, characterized in that a duct is made in the disk and the face of the second piston (39) bearing on the disk (33), in order to put said annular chamber (31) and said balancing chamber (41) in communication.

3. Distributor according to Claim 1 or 2, characterized in that said annular chamber is formed by a shoulder of said first piston (21).

4. Distributor according to Claim 3, characterized in that said circular seat (35) consists of a cylindrical sleeve (37) slipped round the part of smallest diameter of said first piston (21) and immobilized axially during normal operation.

5. Distributor according to any of the preceding claims, characterized in that a third piston (65) is arranged in the control chamber (23), so as to define two independent control volumes (61, 63) in order to cause said distributor to operate as a function of the higher of the pressures of the two control fluids.

6. Distributor according to Claim 5, characterized in that a solenoid valve (51) is arranged between the source of fluid under pressure (9) and one of said independent control volumes (61).

7. Distributor according to Claims 1 to 5, characterized in that a solenoid valve (51) is connected in such a way as to connect said conduit (29) alternately to a source of fluid under high pressure (9) or to a reservoir of fluid under low pressure (11).

8. Distributor according to Claim 6 or 7, characterized in that said solenoid valve (51) is a proportional solenoid valve.

9. Hydraulic actuator comprising at least one piston (100) and two working chambers (102, 104) isolated from one another, characterized in that it comprises, furthermore, a distributor according to any of the preceding claims, the control chamber (23) of which is connected to one of said working chambers (104), while said annular chamber (31) is connected to the other (102) of said working chambers.

## Patentansprüche

1. Verteiler für von einer Druckfluidquelle abgegebenes, unter einem vom Druck eines Steuerfluids abhängenden Druck stehendes Fluid, wobei der Verteiler in einer in einem Körper (1) ausgebildeten Bohrung (3) ein Doppelventilmittel enthalt, das zum einen durch einen ersten Kolben (21) gebildet ist, dessen eines Ende (25) zusammen mit einem ersten Stopfen (5) eine das Steuerfluid erhaltende Steuerkammer (23) abgrenzt, während das andere Ende (27) von einer mit einem Niederdruckfluidvorratsbehälter (11) verbundenen Leitung (29) durchbrochen ist, wobei eine ringförmige Kammer (31) den ersten Kolben (21) umgibt und mit einem Verbraucherkreis für das verteilte Fluid verbunden ist, und zum anderen durch eine Scheibe (33), die ein Ventilelement bildet und aufgrund einer Rückstellfeder (43) auf einem kreisförmigen Sitz (35) ruht, wobei die Scheibe (33) gegenüber dem anderen Ende (27) des ersten Kolbens liegt, wobei dieses andere Ende in der Lage ist, unter der Wirkung des in der Steuerkammer (23) herrschenden Druckes in Anlage an die Scheibe (33) zu geraten, um die Verbindung zwischen der Leitung (29) und der ringförmigen Kammer (31) zu schließen, und dann die Scheibe (33) zu verstellen, um eine Verbindung zwischen einer Zulaufleitung des unter Druck stehenden Fluids und der ringförmigen Kammer (31) zu öffnen, dadurch gekennzeichnet, daß er außerdem einen zweiten Kolben (39) enthält, dessen eine Seite fest mit der Seite der Scheibe (33) verbunden ist, die dem Sitz (35) der Scheibe entgegengesetzt ist, und dessen andere Seite zusammen mit einem zweiten, die Bohrung (3) verschließenden Stopfen (7) eine Ausgleichskammer (41) bestimmt, die permanent mit der ringförmigen Kammer (31) in Verbindung steht.

2. Verteiler nach Anspruch 1, dadurch gekennzeichnet, daß in der Scheibe und in der sich in Anlage an der Scheibe (33) befindlichen Seite des zweiten Kolbens (39) eine Bohrung ausgebildet ist, um die ringförmige Kammer (31) und die Ausgleichskammer (41) zu verbinden.

3. Verteiler nach Anspruch 1 oder 2, dadurch gekennzeichnet, daß die ringförmige Kammer durch einen Absatz des ersten Kolbens (21) gebildet ist.

4. Verteiler nach Anspruch 3, dadurch gekennzeichnet, daß der kreisförmige Sitz (35) durch eine zylindrische Hülse (37) gebildet ist, die auf den Abschnitt mit dem kleinsten Durchmesser des ersten Kolbens (21) aufgeschoben und beim normalen Betrieb axial festgelegt ist.

5. Verteiler nach einem der vorhergehenden Ansprüche, dadurch gekennzeichnet, daß in der Steuerkammer (23) ein dritter Kolben (65) so angeordnet ist, daß zwei voneinander unabhängige Steuervolumen (61, 63) bestimmt sind, damit der Verteiler in Abhängigkeit vom größeren der Drücke der beiden Steuerfluide arbeitet.

6. Verteiler nach Anspruch 5, dadurch gekennzeichnet, daß zwischen der Druckfluidquelle (9) und einem der voneinander unabhängigen Steuervolumen (61) ein Elektroventil (51) angeordnet ist.

7. Verteiler nach den Ansprüchen 1 bis 5, dadurch gekennzeichnet, daß ein Elektroventil (51) so angeschlossen ist, daß es abwechselnd die Leitung (29) mit einer Hochdruckfluidquelle (9) oder einem Niederdruckfluidvorratsbehälter (11) verbindet.

8. Verteiler nach Anspruch 6 oder 7, dadurch gekennzeichnet, daß das Elektroventil (51) ein Proportionalelektroventil ist.

9. Hydraulische Betätigungsvorrichtung mit wenigstens einem Kolben (100) und zwei voneinander isolierten Arbeitskammern (102, 104), dadurch gekennzeichnet, daß es außerdem einen Verteiler nach einem der vorhergehenden Ansprüche enthält, dessen Steuerkammer (23) mit einer der Arbeitskammern (104) verbunden ist, während die ringförmige Kammer (31) mit der anderen (102) der Arbeitskammern verbunden ist.
